Europäisches Patentamt

European Patent Office

Office européen des brevets

(19)

(11) Numéro de publication : **0 490 861 A1**

# (12) DEMANDE DE BREVET EUROPEEN

(21) Numéro de dépôt : **91870198.8**

(22) Date de dépôt : **05.12.91**

(51) Int. Cl.$^5$ : **B01D 45/16**, B01D 45/12, B01D 45/02, B01D 53/26

(30) Priorité : **07.12.90 BE 9001165**

(43) Date de publication de la demande :
**17.06.92 Bulletin 92/25**

(84) Etats contractants désignés :
**AT BE CH DE DK ES FR GB GR IT LI LU MC NL SE**

(71) Demandeur : **Lardinois, Jean-Paul**
**Rue des Champs, 15**
**B-5030 Gembloux (BE)**

(72) Inventeur : **Lardinois, Jean-Paul**
**Rue des Champs, 15**
**B-5030 Gembloux (BE)**

(74) Mandataire : **Vanhamme, Joseph Louis**
**Office Parette (Fred Maes) Paepsem Business**
**Park 18 E Boulevard Paepsem**
**B-1070 Bruxelles (BE)**

(54) **Procédé pour extraire une substance présente dans un fluide gazeux porteur, sous forme de particules solides ou de liquide etsystème pour la mise en oeuvre de ce procédé.**

(57) L'invention concerne un procédé pour extraire une substance liquéfiable présente dans un fluide gazeux porteur. Selon ce procédé on amène le fluide à s'écouler à travers une tuyère du type convergent-divergent de façon que dans cette tuyère le fluide subisse une expansion adiabatique rapide et détermine les sections transversales $(A(x)/A_O)$ le long de l'axe (x) de la tuyère de façon que les courbes de pression (P) et de la vitesse (v') présentent dans la zone du col $(A_O)$ de la tuyère au moins un palier. Dans ces conditions la substance liquéfiable se condense sous forme de gouttelettes dont le nombre est relativement faible mais qui présente un volume important.

Fig. 2

EP 0 490 861 A1

L'invention concerne un procédé pour extraire une substance présente dans un fluide gazeux porteur, sous forme de particules telles que des particules solides ou des goutellettes, selon lequel on amène le fluide porteur à s'écouler à une vitesse élevée, avantageusement supersonique ou transsonique, et introduit cet écoulement dans un dispositif séparateur dans lequel on impose à cet écoulement un trajet courbe, la séparation s'effectuant sous l'effet des forces centrifuges agissant sur les particules, et un système pour la mise en oeuvre de ce procédé.

On connaît déjà un système de ce type dans lequel on utilise un canal courbe divergent, de section transversale rectangulaire plus haute que large, pour la séparation des particules par effet d'inertie. L'augmentation de la section transversale se fait par augmentation de la hauteur du canal dans la direction d'écoulement du fluide, dans le plan de la courbure.

Ce système connu présente l'inconvénient que l'augmentation de la hauteur du canal a pour conséquence une augmentation de la distance que les particules doivent parcourir. Par conséquent, l'effet séparateur de ce système est réduit.

La présente invention a pour objectif de proposer un système qui ne présente pas l'inconvénient qui vient d'être décrit.

Pour atteindre ce but, le procédé selon l'invention est caractérisé en ce que l'on augmente la section transversale du canal séparateur pour obtenir une augmentation de la vitesse d'écoulement du fluide dans ce canal, sans que la distance que les particules doivent parcourir soit augmentée.

Selon une caractéristique avantageuse de l'invention lorsque la substance à extraire du fluide porteur est une substance liquéfiable présente en une quantité correspondant approximativement à l'état de saturation en cette substance, on soumet le fluide à un sous-refroidissement par une expansion adiabatique en faisant passer le fluide à travers une tuyère, dans des conditions assurant une condensation sous forme de particules de substance liquéfiée relativement grandes et fait entrer le fluide contenant ces particules dans le canal séparateur précité.

Selon une autre caractéristique avantageuse de l'invention, lorsqu'il s'agit d'extraire une substance contenue dans le fluide porteur sous forme de fines particules, on crée par expansion dans une tuyère à la sortie de celle-ci un écoulement rapide de fluide porteur, utilise un écoulement de particules liquéfiées comme décrit ci-avant, comme écoulement auxiliaire, met en contact les deux écoulements de façon que les particules créées dans l'écoulement auxiliaire traversent l'écoulement aux particules à extraire dans le canal séparateur, pour obtenir une absorption des fines particules par les grosses particules de substances liquéfiées, par effet de coagulation stimulé.

Le système pour la mise en oeuvre du procédé selon l'invention est caractérisé en ce que le canal de séparation présente une hauteur constante tandis que sa largeur augmente dans le sens d'écoulement du fluide.

Selon une caractéristique avantageuse de ce système la tuyère d'expansion adiabatique précitée comporte une zone rétrécie formant col dont le profil est adapté pour assurer un sous-refroidissement suffisant pour déclencher la nucléation mais assez faible pour éviter la formation d'un trop grand nombre de particules de substance liquéfiée, et une zone divergente, qui fait suite au col et qui est configurée pour assurer une croissance des particules préalablement formées avec un taux très faible ou zéro de formation de nouvelles particules.

Selon une caractéristique avantageuse de l'invention, ladite zone de croissance des particules préalablement formée au niveau du col de la tuyère est configurée pour que la vitesse d'écoulement du fluide y soit sensiblement constante ou varie peu et le sous-refroidissement diminue en dessous de la valeur critique de nucléation.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels :

– les figures 1a et 1b montrent schématiquement l'évolution de la pression et du sous-refroidissement le long de l'axe x d'une tuyère selon l'état de la technique et selon l'invention ;

– les figures 2 et 3 montrent le profil d'une tuyère selon l'invention et des grandeurs physiques qui caractérisent cette tuyère, le long de l'axe de la tuyère ; les grandeurs physiques figurant se rapportent à un écoulement de vapeur d'eau à 1 bar et 373,15°K et les diagrammes ayant été établis sur base de résultats de calculs numériques effectués à l'Ecole Royale Militaire, Bruxelles ;

– la figure 4 illustre une méthode pour déterminer le profil d'une tuyère selon la présente invention ;

– la figure 5 est une vue schématique d'un système auquel est intégré un module de tuyère et de séparateur selon la présente invention ;

– la figure 6 est une vue en coupe axiale d'un premier mode de réalisation d'un module selon l'invention ;

– la figure 7 est une vue en coupe axiale d'une version modifiée du module selon la figure 6;

2

– la figure 8 est une vue en coupe axiale d'un second mode de réalisation d'un module de tuyère et de séparation selon la présente invention ;

– la figure 9 est une vue en coupe partielle selon la ligne IX-IX de la figure 8 ;

– la figure 10 est une vue en coupe axiale d'un troisième mode de réalisation d'un module de tuyère et de séparateur selon la présente invention ;

– la figure 11 est une vue en coupe selon la ligne XI-XI de la figure 10 ;

– la figure 12 est une vue en coupe le long de la ligne XII-XII de la figure 10.

– la figure 13 montre schématiquement un quatrième mode de réalisation d'un module de tuyère et de séparateur selon la présente invention ;

– la figure 14 est une vue en coupe axiale d'un cinquième mode de réalisation d'un module de tuyère et de séparateur selon la présente invention ;

– les figures 15 à 18 sont des vues en coupe respectivement le long des lignes XV à XVIII de la figure 14 ;

– la figure 19 est une vue en coupe d'un sixième mode de réalisation d'un module de tuyère et de séparateur selon la présente invention ;

– les figures 20 et 21 sont des vues en coupe, avec arrachement, le long des lignes XX et XXI de la cloison 52 de la figure 19 et montre celle-ci à deux états de fonctionnement différents ;

– la figure 22 est une vue en coupe le long de la ligne XXII-XXII de la figure 19 ; et

– la figure 23 montre schématiquement le fonctionnement du mode de réalisation de l'invention selon la figure 19.

L'invention concerne un procédé et un système de séparation de particules solides ou de substance liquéfiée, de leur fluide porteur. Elle implique l'utilisation d'un séparateur par inertie et, en amont de celui-ci, le cas échéant, un dispositif de tuyère qui a pour fonction générale de transformer le fluide porteur de la substance à extraire en un écoulement rapide permettant la séparation de la substance par effet d'inertie. Cet écoulement peut être créé par une expansion adiabatique à l'aide d'une tuyère. Lorsque la substance à extraire est une substance liquéfiable présente dans le fluide porteur en une quantité telle que le fluide porteur en soit approximativement saturé, cette expansion adiabatique du fluide à la sortie de la tuyère a pour effet que la substance se condense sous forme de gouttelettes. Un aspect principal de la présente invention consiste à conduire l'expansion adiabatique dans des conditions qui permettent la formation d'un nombre de particules de substance liquéfiée relativement faible, par rapport à l'état de la technique, mais d'une taille importante. Il s'est avéré que ces conditions particulières peuvent être réalisées en utilisant une tuyère du type convergent-divergent d'un profil particulier.

On décrira ci-après tout d'abord cet aspect fondamental de l'invention. On sait que l'expansion adiabatique par exemple dans une tuyère du type susmentionné, lorsque l'écoulement de gaz constitue un mélange qui contient une composante ayant une pression partielle proche de sa pression de saturation, a les conséquences suivantes :

Sa pression partielle dépasse la pression d'équilibre associée à sa température, et dans le cas d'une transition vers l'équilibre thermodynamique, un très grand nombre de particules de substance liquéfiée se forme.

– La chaleur de vaporisation de ces particules se dégage dans le mélange de gaz en occasionnant une augmentation de la température de l'écoulement ayant subi l'expansion et ainsi une réduction du refroidissement aérodynamique.

– La pression, la température et le volume spécifique le long du profil de tuyère sont alors déviés des valeurs qu'ils auraient s'il n'y avait pas eu de condensation.

– La chaleur dégagée dans l'écoulement, en raison de la formation des particules accélère ou ralentit l'écoulement selon que celui-ci est subsonique ou supersonique.

Cependant si l'expansion du mélange de gaz se produit très rapidement, un équilibre thermodynamique n'a pas suffisament de temps pour s'instaurer. En effet, les transferts de chaleur et de masse sont des processus de diffusion qui nécessitent plus de temps pour atteindre une situation d'équilibre que les processus d'expansion qui eux atteignent leur équilibre à la vitesse du son.

Il est par ailleurs connu que des très petites particules (ayant un diamètre de quelques nanomètres) ont une tendance naturelle à s'évaporer spontanément si elles ne sont pas entourées d'une atmosphères supersaturée. Ceci s'explique par le fait que les forces de surface agissant sur l'enveloppe d'une particule ou gouttelette sont inversement proportionnelles au rayon de ces particules et que c'est dû à ces forces que, pour des très faibles rayons, la pression à l'intérieur des particules peut être sensiblement plus élevée que la pression du gaz environnant. Dans ce cas, la particule s'évapore spontanément.

D'autre part, lorsqu'une particule est entourée d'un environnement hautement super-saturé, elle s'accroît. Pour chaque rapport de sursaturation, il existe un rayon critique en dessous duquel une particule s'évapore spontanément et au-dessus duquel elle augmente en volume. Quand le rapport de sursaturation est faible, les rayons critiques sont importants et la probabilité d'une formation de particules ou de gouttelettes dans un délai de temps raisonnable, est extrêmement faible. Des calculs théoriques et des tests ont montrés que, lorsque la super-saturation augmente progressivement, le taux de formation de particules, à savoir le taux de nucléation, reste tout d'abord extrêmement faible et augmente subitement lorsque des rapports de sursaturation importants sont atteints. On parle alors d'une impulsion de nucléation. D'autre part, il a été démontré que la nucléation se produit le long d'une ligne correspondant à une fraction d'humidité approximativement constante sur le diagramme enthalpie-entropie. Cette ligne est appelée ligne de Wilson.

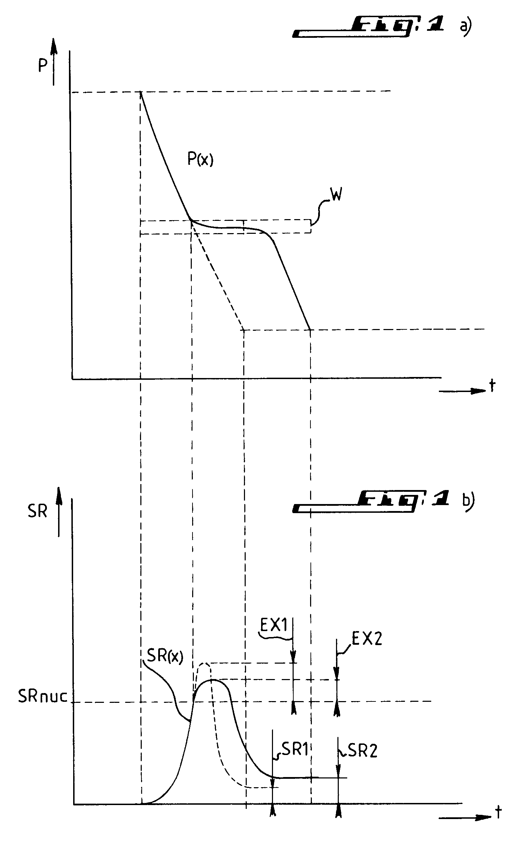

Les figures 1a et 1b illustrent sous forme de courbes en traits interrompus l'évolution respectivement de la pression P et du sous-refroidissement SR se produisant dans un écoulement de gaz lorsque celui-ci subit une expansion adiabatique dans une tuyère du type convergent-divergent connu. Les valeurs de la pression et du sous-refroidissement sont indiquées en fonction du temps t. On constate que la pente de la tangente à la courbe P est importante et l'allure à laquelle le sous refroidissement SR se crée est élevée. L'écoulement de gaz "entre" rapidement dans la zone de Wilson W, ce qui se caractérise par une pente raide de la courbe P et un sous refroidissement important. En particulier l'excédant EX1 du sous refroidissement maximum par rapport à sa valeur critique $SR_{nuc}$ est relativement important. Il en résulte des taux de nucléation relativement élevés et donc un nombre de particules ou gouttes excessif. Le sous-refroidissement résiduel $SR_1$ en fin de détente est modéré, car tout nouveau déséquilibre créé par la poursuite de la détente se résorbe plus rapidement en raison d'une concentration en gouttes très importante. Or, ce déroulement classique de la condensation qui aboutit à la formation d'un grand nombre de fines gouttelettes a pour inconvénient que celles-ci, en raison de leurs faibles dimensions, sont difficilement séparables du fluide porteur dans un dispositif séparateur par inertie.

L'invention est fondée sur la découverte comme cela a été indiqué plus haut, qu'il est possible d'éviter la formation d'un nombre très élevé de fines gouttelettes et de réaliser une condensation de la substance liquéfiable sous forme d'un nombre plus limité de gouttes, mais qui sont plus grandes, en faisant de sorte que l'évolution de la pression P et du sous refroidissement SR se fassent selon les courbes indiquées par des lignes pleines sur les figures 1a et 1b. On constate que dans le cas de l'invention la pente de la tangente à la courbe P est plus faible aux abords de la zone de Wilson W que dans l'état de la technique. Le rythme auquel le sous refroidissement se créé est alors ralenti. L'écoulement "entre" en douceur dans la zone de Wilson. Il se produit un phénomène d'auto-extinction de la nucléation, par suite du dégagement de chaleur provoqué par la condensation, qui engendre ces effets alors que la concentration en gouttes est encore restreinte, ce qui est matérialisé sur la figure 1b par une valeur EX2 plus faible que EX1. Ce phénomène d'auto-extinction empêche la formation de nouvelles gouttes. Par contre les gouttes déjà formées augmentent en volume. Ceci est dû au fait que, la détente se poursuivant temporairement au ralenti ou étant interrompue,le sous refroidissement qui n'est temporairement plus entretenu par la poursuite de la détente, peut se résorber et atteindre des valeurs essentiellement inférieures à $SR_{nuc}$ avant la reprise de la détente.

Il s'est avéré dans le cadre de l'invention qu'une condensation telle que déterminée par les courbes selon l'invention est réalisable à l'aide d'une tuyère du type convergent-divergent, mais ayant un profil particulier. Le profil d'une telle tuyère est représenté à la figure 2 par la ligne pleine. Cette figure donne le rapport de la section transversale courante A et de la section transversale $A_O$ au niveau du col de la tuyère, le long de l'axe x de cette dernière. Les courbes v'(x) et P(x) illustrent pour ce profil de tuyère l'évolution respectivement du rapport de la vitesse v de l'écoulement et de la vitesse du son (nombre de Mach) et de la pression du fluide s'écoulant à travers la tuyère. On constate que la vitesse v et la pression P présentent un palier au niveau du col $A_O$ du profil de tuyère, c'est-à-dire entre les valeurs $x_1$ et $x_2$. La figure 3 illustre l'évolution du sous refroidissement SR, de la température T de l'écoulement, du rayon des particules RP et de la nucléation NUC le long de l'axe x de la tuyère. On constate que le sous-refroidissement augmente jusqu'à l'entrée dans la zone du col $A_O$ de la tuyère. Dans cette zone le sous-refroidissement reste d'abord constant puis diminue. Concernant la nucléation, on constate que sa courbe présente la forme d'une impulsion d'une largeur relative importante et d'une hauteur relativement faible. En effet, la nucléation se produit au niveau du col $A_O$ de la tuyère légèrement décalée vers l'avant, dans une zone d'une longueur importante de par exemple approximativement 25 cm d'une tuyère de 1,5 m de long. En comparaison, dans une tuyère du type convergent-divergent connu comparable, cette impulsion aurait une très faible largeur de 0,5 à 1 mm et présenterait une hauteur beaucoup plus importante. Cette impulsion de nucléation très pointue et haute des tuyères selon l'état de la technique a pour conséquence la formation d'un très grand nombre de petites particules. Dans le cadre de l'invention, l'impulsion de nucléation plus large et moins haute signifie qu'il s'agit d'un processus se déroulant plus lentement et donnant naissance à un nombre de particules beaucoup plus faible. La condensation de la substance liquéfiable s'est fait notamment par croissance du nombre comparativement faible de particules, déjà essentiellement en amont de la section de col de la tuyère, comme il ressort de la courbe RP illustrant l'augmentation du rayon des particules. L'allure non progressive de la courbe RP(x) en avant de $X_O$ est due à un ajustement pas encore optimal du profil de la tuyère.

Les figures 2 et 3 montrent donc clairement que le profil de la tuyère selon l'invention qui permet la formation dans la zone rétrécie de particules d'un diamètre moyen de 1,2 micromètres et d'un diamètre d'environ 1,4 micromètres pour un nombre Mach final d'environ 1,26, est caractérisé par les propriétés thermodynamiques particulières.

La figure 2 montre également que le nombre de Mach au col est inférieur à 1 ce qui n'empêche pas l'écoulement de devenir supersonique en aval du col sous l'effet du dégagement de chaleur provoqué par la condensation puis, à cause de l'augmentation de la section.

Cette propriété caractéristique de l'invention est très utile car elle permet de recomprimer l'écoulement dans une tuyère convergente divergente, en aval du canal séparateur précité, en étant dispensé d'amorcer ledit écoulement supersonique.

Ceci permet de réduire les pertes de charge du système et épargne le coût des appareils auxiliaires qui seraient nécessaire pour amorcer ledit écoulement supersonique selon l'état de la technique.

Etant donné la complexité des systèmes d'équations mathématiques qui décrivent les phénomènes qui se produisent dans les tuyères condensantes, notamment leur caractère non linéaire, il n'existe pas de solutions analytiques qui décrivent l'écoulement dans une tuyère condensante et établissent une relation entre les paramètres qui caractérisent cet écoulement et du profil de la tuyère le long de l'axe de celle-ci. Il s'est cependant avéré possible d'obtenir une description satisfaisante d'un écoulement condensant dans une tuyère donnée au moyen de programmes de calculs qui procèdent par itérations successives, mais qui ne convergent que lentement en raison du caractère soudain du déclenchement de la nucléation. Chaque fois que l'on a défini une forme de tuyère, on vérifie si les différents paramètres évoluent selon les courbes illustrées aux figures 2 et 3. Si cela n'est pas le cas, il faut modifier la forme de la tuyère et recommencer les calculs. Pour réduire le périmètre des investigations en écartant les solutions qui sont à priori mauvaises, on propose, conformément à l'invention, de définir des profils de tuyère limites TY1 et TY2 qui encadrent le profil de tuyère recherché TY. On détermine ci-après ces contours TY1 et TY2 de telle sorte qu'ils encadrent le contour ou profil TY de suffisamment près pour que le dimensionnement puisse se faire rapidement. La figure 4 illustre ces différents profils de tuyère.

Comme il a été expliqué en se référant à la figure 1, la condensation par formation d'un nombre de gouttes relativement faibles mais de grand volume s'obtient selon l'invention en créant des conditions qui assurent que la pression P(x) entre en "douceur" dans la zone de Wilson W comme le montre la figure 1a (ligne pleine) et qu'en conséquence l'excédant EX2 du sous-refroidissement réel maximal par rapport au sous-refroidissement critique SRnuc auquel la nucléation se déclenche soit aussi faible que possible. Il existe une corrélation entre la pente de la tangente à la courbe de pression P(x) immédiatement en amont de la section transversale du canal de tuyère Anuc, c'est-à-dire de la section de déclenchement de la nucléation, et l'excédant EX précité. Si la pente de la tangente dP(x)/dx immédiatement en amont de la section Anuc augmente, EX augmente et si dP(x)/dx à cet endroit diminue, EX diminue également. En prenant en compte cette corrélation, il est possible de réaliser à partir des profils de tuyères limites TY1 et TY2 le profil de tuyère TY selon l'invention.

Le profil du canal de tuyère TY1 doit présenter aux alentours de la section Anuc une plage dans laquelle la valeur de dP(x)/dx est à la fois quasi-constante et aussi réduite que possible. Il s'est avéré que ce résultat peut être obtenu en imposant une valeur constante du taux de détente instantanée PI en amont de Anuc, c'est-à-dire dans toutes les sections où l'humidité de l'écoulement est nulle. Le profil TY1 est par conséquent celui d'un écoulement non condensant, c'est-à-dire d'un fluide sec. Ce profil peut être défini selon les équations suivantes.

On sait que le taux de détente instantané est définit par :
$$PI = -(1/P).(dp/dt) \quad (1)$$
en intégrant cette expression on obtient :
$$P/P_O = EXP(-PI_c.t) \quad (2)$$
où $P_O$ est la pression initiale et $PI_c$ est la valeur de consigne du taux de détente PI. EXP indique qu'il s'agit d'une fonction exponentielle.

$P/P_O$ peut également être exprimé en fonction du rapport des chaleurs spécifiques et du nombre de Mach de la manière suivante :
$$P/P_O = 1/[1 + ((k-1)/2).M^2]^{(k/(k-1))} \quad (3)$$
où k est le rapport des chaleurs spécifiques et M le nombre de Mach.

En égalant les expressions (2) et (3) on obtient :

$$1 + [(k-1)/2].M^2 = EXP\left\{ + [(k-1)/k].PI_c.t \right\} \quad (4)$$

En posant

$$Z = 1 + [(k-1)/2)].M^2 \quad (5)$$

on peut exprimer le nombre de Mach M de la manière suivante :

$$M(Z) = [(2/(k-1)).(Z-1)]^{1/2} \quad (6)$$

Pour déterminer la section transversale A(x) le long de l'axe x de la tuyère, on peut utiliser les équations suivantes :

$$A = Q_O/(Rho.v) \quad (7)$$

où $Q_O$ est le débit massique, Rho la masse volumique et v la vitesse locale de l'écoulement.

La masse volumique Rho peut être déterminée par :

$$Rho/Rho_O = 1/(Z^{1/(k-1)}) \quad (8)$$

La vitesse v peut être exprimée par les équations suivantes :

$$v = M.c \quad (9)$$
$$c = (k.R.T)^{1/2} \quad (10)$$
$$T/T_O = 1/Z \quad (11)$$

$$v = \left\{ [2.k.R.T_O/(k-1)].[(Z-1)/Z] \right\}^{1/2} \qquad (12)$$

où c est la vitesse locale du son, T la température, $T_O$ la température initiale et R la constante des gaz.

En substituant dans l'équation (7) Rho et v par leur valeur tirées des équations (8) et (12), on obtient :

$$A = (Q_O/Rho_O)/(2.k.R.T_O/(k-1))^{1/2}.Z^{(k+1)/[2.(k-1)]}/(Z-1)^{1/2}$$

$$(13)$$

ou plus simplement

$$A = C1.Z^{(k+1)/[2.(k-1)]}/(Z-1)^{1/2} \quad (14)$$

en posant :

$$C_1 = (Q_O/Rho_O)/[2.k.R.T_O/(k-1)]^{1/2} \quad (15)$$

Pour exprimer l'abcisse en fonction de la variable Z il faut intégrer l'expression

$$x = \Sigma v.dt \quad (16)$$

et exprimer le résultat en fonction de Z.

$$x = \Sigma \left\{ (2.k.R.T_O/(k-1).[(Z-1)/Z)] \right\}^{1/2}.dt \qquad (17)$$

En adoptant Z comme variable et en tirant la valeur de dt de la relation (4) qui exprime aussi la valeur de Z, on obtient :

$$x = \Sigma \left\{ (2.k.R.T_O)/(k-1)/[(Z-1)/Z] \right\}^{1/2}.\left\{ k/[(K-1).PI_c] \right\}.dZ/Z \quad (18)$$

En faisant le changement de variable

$$u^2 = (Z-1)/Z \quad (19)$$

on obtient :

$$x = \Sigma C_2.[(Z-1)/Z]^{1/2}.dZ/Z \quad (20)$$
$$x = \Sigma C_2.2.u^2/(1-u^2).du \quad (22)$$

où

$$C_2 = \left[2.k.R.T_0/(k-1)\right]^{\frac{1}{2}}. \left\{k/\left[(k-1).PI_c\right]\right\} \qquad (21)$$

Après calcul on obtient l'expression suivante :

$$x = 2.C_2. \left\{-u + \frac{1}{2}.Ln\left[(1+u)/(1-u)\right]\right\} \qquad (23)$$

Cette dernière relation donne la corrélation entre x et u(Z). En définissant une succession de points sur l'axe x régulièrement espacés, on peut trouver la variable Z en chacun de ces points. La section transversale A(x) le long de l'axe x de la tuyère s'obtient alors à l'aide de l'équation (14). On a ainsi défini le profil de la tuyère TY1 de la figure 4.

Pour obtenir le profil de canal de tuyère TY2, on se réfère à TY1 et fait l'hypothèse que l'humidité soit maximale dans toutes les sections transversales du canal. Plus précisément, on fait l'hypothèse que dans chaque section A(x) de la tuyère la pression P et le nombre de Mach sont identiques à ceux dans la tuyère TY1. On calculera à chaque section A la quantité d'humidité condensée, en stipulant que la pression partielle de vapeur d'eau soit égale à la pression de saturation à la température locale. On tiendra également compte du bilan énergétique. Par cette méthode, on obtiendra à chaque section une valeur de la température locale et de la vitesse.

On en déduit le profil TY2 en exprimant la conservation du débit selon l'équation suivante :

$$A(x) = Q(x)/Rho(x).v(x) \qquad (24)$$

où Q est le débit masse de la phase gazeuse, Rho est le poids volumique du gaz en kg/m³ et v est la vitesse locale de l'écoulement.

On notera que si le débit massique (gaz + liquide) est constant, le débit gaz Q(x) est variable puisque la condensation modifie la répartition de la masse dans les différentes phases.

L'expression (24) permet de définir le profil de la tuyère TY2 de la figure 4.

On constate que la section A(x) de la tuyère TY2 est plus grande ou égale à la section A(x) de la tuyère TY1 en toute section A sur l'axe X. Ceci peut être imputé au fait que dans la tuyère TY2 le gaz est systématiquement plus chaud, ce qui, à pression égale, en diminue la densité. C'est donc la valeur de Rho dans l'expression donnée plus haut qui est responsable de ce rapport des sections transversales. On constate également que dans la tuyère TY2 le col $A_0$ s'est déplacé vers l'amont par rapport à sa position dans la tuyère TY1. Le profil TY2 peut être interprété comme étant le profil qui donne en chaque section les mêmes pressions et nombres de Mach que le profil TY1 mais dans lequel l'humidité serait instantanément à son état d'équilibre. Ce serait le cas si l'écoulement était ensemencé par une infinité de germes de condensation.

Le profil de tuyère TY selon l'invention est compris entre les profils TY2 et TY1, ces profils correspondant respectivement à des hypothèses d'humidité maximale et d'humidité nulle.

En amont de la section Anuc, le profil TY peut être quelconque tant que la section est beaucoup plus grande que Anuc. Lorsque A approche la valeur de Anuc, le profil TY doit se confondre avec le profil TY1 pour faire en sorte qu'à x-$x_{nuc}$ on ait effectivement les faibles valeurs de dP(x)/dx recherchées. A partir de la section Anuc il faut progressivement élargir la section pour faire en sorte que la chaleur produite par la condensation puisse se dégager. On quittera donc tangentiellement le profil TY1 pour se rapprocher tangentiellement du profil TY2, comme l'illustre la figure 4.

On procédera ensuite par essai et itération pour obtenir des formes de courbe représentées aux figures 2 et 3 en tenant compte de la nécessité d'ouvrir la section dès que possible en aval de la section Anuc.

On constate que le col $A_0$ de la tuyère selon l'invention se situe en amont de chacun des cols des tuyère TY1 et TY2. Il est avantageux que le profil TY de la tuyère selon l'invention joigne le profil TY2 vers la fin de la zone de nucléation.

Après avoir défini les sections transversales d'une tuyère selon l'invention, on exposera ci-après quelques considérations concernant la longueur la zone de nucléation de cette tuyère, qui est une grandeur géométrique importante. En effet, il y a une longueur minimale en dessous de laquelle il n'est pas possible de produire des gouttes de diamètre suffisant quelle que soit l'aire de la section au col $A_0$.

Pour estimer cette longueur minimale, il faut choisir, de façon appropriée, la détente instannée de $PI_c$. Le choix $PI_c$ est dicté par la nécessité d'entrée en douceur dans la zone de Wilson. L'évolution du gaz dans la tuyère est de type adiabatique, ce qui détermine la relation suivante :

$$P/P_0 = (T/T_0)^{k/(k-1)} \qquad (26)$$

On peut lier $PI_c$ et dT/dx en dérivant par rapport à t le logarithme naturel de l'expression (26). On obtient ainsi :

$$PI_c = [k/(k-1)].(-1/T).(dT/dx).v \quad (27)$$

Si $T = T_{nuc}$ et $v = v_{nuc}$, le seul terme inconnu du membre de droite est dT/dx. Il suffit donc de lui imposer une valeur arbitraire raisonnable, par exemple 85°C/m pour que $PI_c$ soit connu. En supposant que $v_{nuc} = 300m/s$ ; $T_{nuc} = 300° K$ ; $k \simeq 1,4$ , on obtient $PI_c = 300/s$.

Les profils TY1 et TY2 ont, par hypothèse, les mêmes longueurs. Il est plus commode de raisonner sur la longueur du profil TY1 puisqu'on dispose d'expressions analytiques, comme cela a été exposé plus haut.

L'abcisse $x_{nuc}$ définit, comme cela a été expliqué précédemment, la section transversale de la tuyère à laquelle le sous-refroidissement SR est égal à $SR_{nuc}$. Cette dernière valeur représente un état thermodynamique auquel correspond une valeur $Z_{nuc}$ du paramètre Z défini plus haut et les valeurs de $P_{nuc}$, $T_{nuc}$, $M_{nuc}$ qui sont associées. On peut définir une abscisse $x'_{nuc}$ de façon que :

$$SR(x) = SR_{nuc} + \Delta T$$

$SR_{nuc} + \Delta T$ représente également un état thermodynamique auquel correspond une valeur $Z'_{nuc}$ du paramètre Z et les valeurs $P'_{nuc}$, $T'_{nuc}$, $M'_{nuc}$. Cette valeur Z', de même que Z, est indépendante de $PI_c$.

La distance $D = x'-x$ est inversement proportionnelle à la valeur de $PI_c$ comme cela ressort des équations données plus haut. On peut alors choisir une valeur arbitraire raisonnable de $\Delta T$, par exemple 15°C, pour estimer la longueur minimale. Le choix de $\Delta T$ n'est pas quelconque. En fait, on sait que le taux de nucléation augmente très rapidement dès que le sous-refroidissement atteint la valeur $SR_{nuc}$. Il est donc souhaitable que $\Delta T$ ne représente qu'une fraction de $T_{nuc}$. Par exemple $\Delta T$ sera egal 0,3 a 0,6 $SR_{nuc}$.

Il est encore à noter qu'il existe une corrélation entre la détente instantanée PI et la longueur de la partie convergente de la tuyère.

Dans la tuyère TY1, la valeur du paramètre Z au col est toujours égale à 1,2. Ceci permet de faire un diagramme figurant la longueur d'un convergent du type PI = constante pour des conditions thermodynamiques à l'entrée de la tuyère donnée. Il s'est avéré que pour des tuyères courtes la valeur moyenne de PI est si grande que la zone de Wilson ne peut pas être abordée en douceur. Une tuyère dont la partie convergente aurait 10 cm de longueur aurait une valeur moyenne de PI = 1808/s, ce qui, avec des conditions évoquées plus haut, correspond à des valeurs de dT/dx de 516°C/m, soit 5,16°C/cm. Ceci ne permet pas d'entrer en douceur dans la zone de Wilson.

Les valeurs dT/dx de l'ordre de 0,5° à 1°C/cm sont plus appropriées. Il y correspond des valeurs de PI que l'on peut déterminer en utilisant la formule (27).

Il ressort de ce qui précède qu'il faut maintenir telle quelle l'échelle des longueurs lorsqu'on veut réaliser un dispositif ayant un autre débit nominal. En effet, si l'on souhaite réduire d'un facteur 2 le débit nominal, il suffit de réduire les sections transversales d'un facteur 2 sans que l'échelle des longueurs en soit affectée. Dans le cas contraire, il y aurait contraction du "cylindre" de nucléation et réduction du diamètre moyen des gouttes formées.

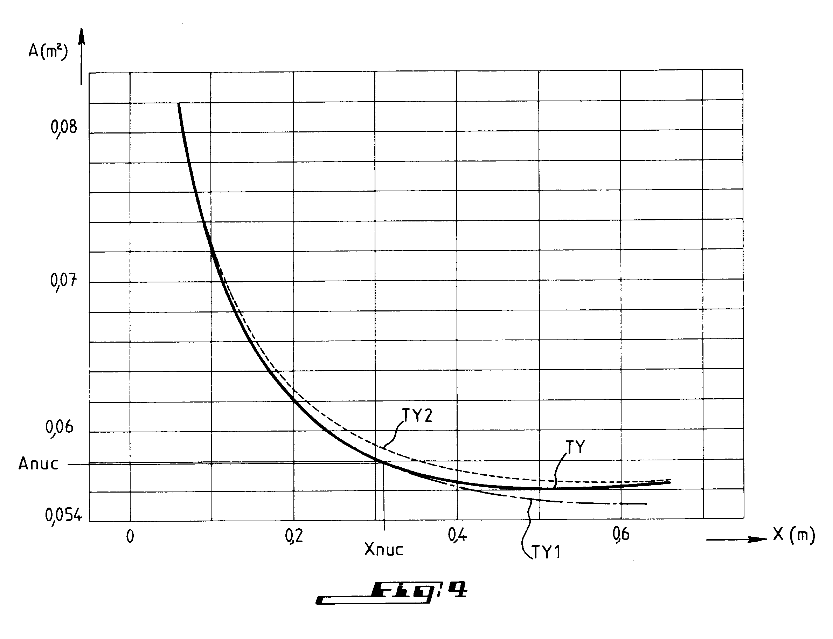

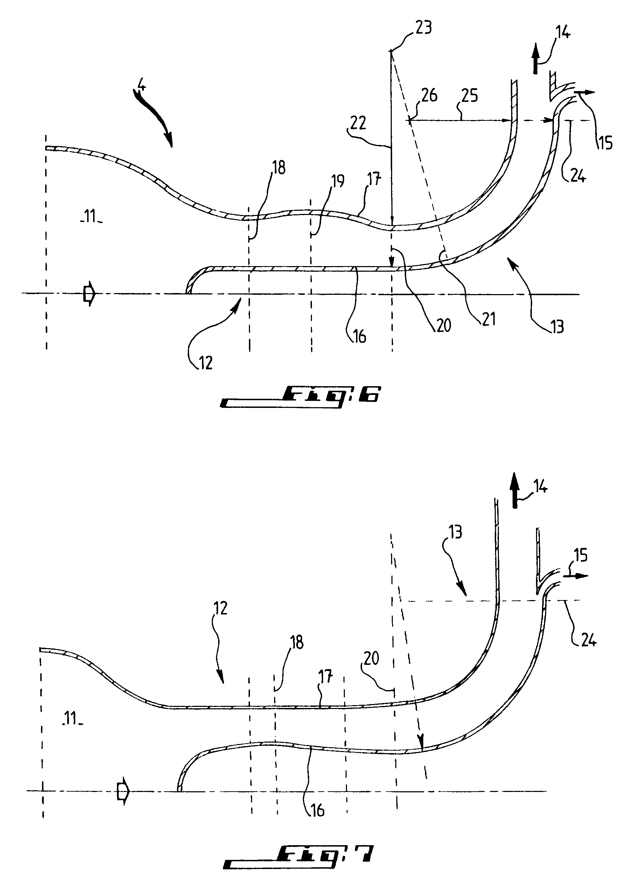

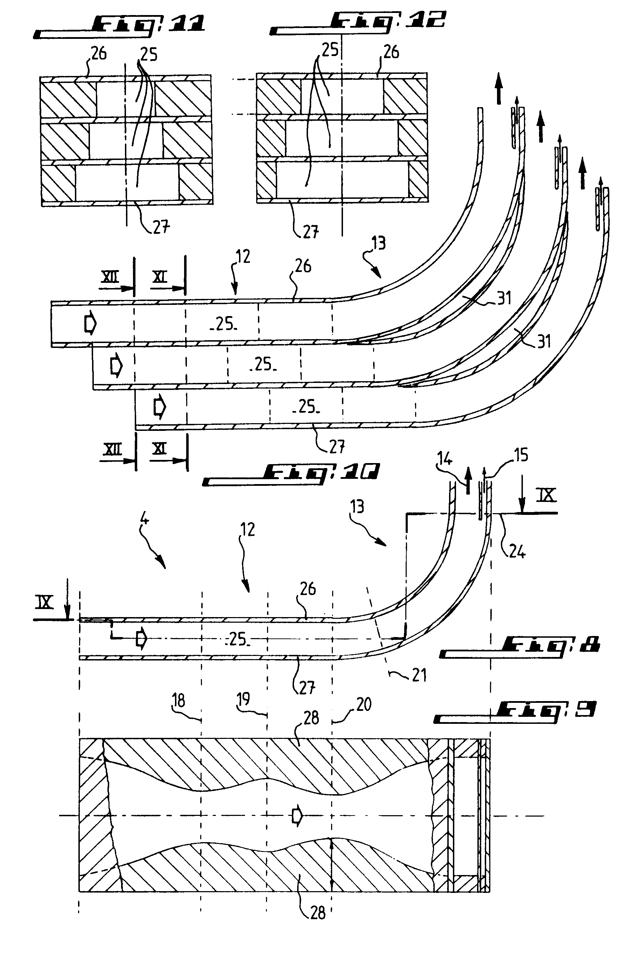

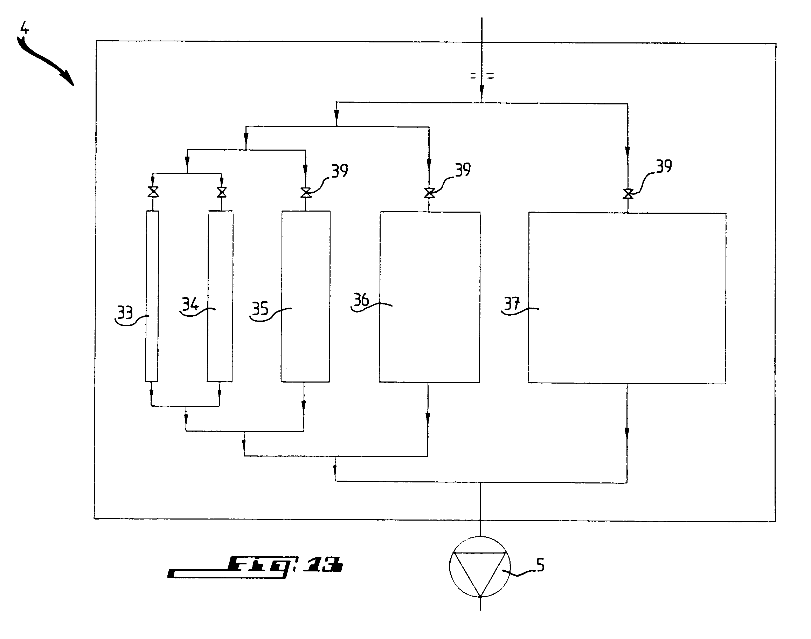

On décrira ci-après, en se référant aux figures 5 à 23 un système pour extraire une substance présente dans un fluide gazeux porteur sous forme de particules, qui utilise une ou un arrangements de plusieurs tuyères conçues selon les considérations, qui viennent d'être énoncées.

La figure 5 montre, à titre d'exemple, un système selon l'invention, qui comprend successivement dans le trajet d'écoulement du fluide reçu en 1 un premier dispositif 2 formé par un collecteur de particules, tel qu'un filtre ou un cyclone, ayant pour fonction d'extraire du fluide les particules d'un diamètre trop important ou même moyen et susceptibles d'obstruer les dispositifs suivants ou d'y provoquer une érosion excessive, un deuxième dispositif 3 formé par exemple par un échangeur de chaleur et destiné à ajuster la température du fluide à une valeur permettant d'optimaliser le rapport d'humidité avant que le fluide entre dans le module suivant, à savoir le module 4 qui comporte une tuyère ou un arrangement de plusieurs tuyères et un dispositif séparateur des particules du fluide gazeux porteur selon l'invention. En aval de ce module est disposé un dispositif tel qu'un ventilateur 5 ayant pour fonction d'assurer l'écoulement du fluide à travers le système, par exemple par un effet d'aspiration. La référence 6 indique la sortie du système.

Le module 4 divise le fluide porteur en deux écoulements, un écoulement principal, duquel des particules et des substances liquéfiables ont été extraites et qui est introduite dans le dispositif ventilateur 5, et un écoulement secondaire porteur des particules et/ou des substances liquéfiées extraites du fluide porteur. Cet écoulement secondaire est amené à un dispositif séparateur auxiliaire 7. A ce dernier est associé un récipient 8 destiné à recevoir les substances liquides éventuelles de l'écoulement secondaire, tandis que la phase gazeuse de celui-ci est évacuée du dispositif 7 à l'aide d'un ventilateur aspirateur 9 et ensuite recyclée dans le fluide porteur en amont du dispositif à tuyère 4. Comme l'indique les lignes en traits interrompus, ce recyclage peut avoir lieu directement en amont de chacun des dispositifs 2, 3 ou 4 ou ailleurs.

En se reportant aux figures 6 à 23, on décrira ci-après plusieurs modes de réalisation d'un module 4 selon la présente invention.

Le mode de réalisation montré à la figure 6 est réalisé sous forme d'un corps de révolution comprenant une partie d'entrée cylindrique 11 destinée à recevoir le fluide gazeux porteur d'une substance liquéfiable, une partie 12 annulaire constituant une tuyère selon l'invention, destinée à assurer la condensation de la substance liquéfiable sous forme de fines gouttelettes, ainsi qu'une partie de séparation 13 destinée à séparer les gouttelettes du fluide porteur. Ce dernier, quitte le module après l'extraction de la substance liquéfiable en 14 tandis que la substance liquéfiée sort en 15 sous forme de l'écoulement secondaire susmentionné. La partie de tuyère 12 présente une forme annulaire ayant le profil qui vient d'être décrit, défini entre les parois sensiblement cylindriques respectivement radialement interne 16 et externe 17. Elle comporte une première portion d'entrée convergente se terminant par le col 18 où le sous-refroidissement atteint des valeurs suffisamment importantes pour déclencher la nucléation, mais suffisamment faibles cependant pour éviter la formation d'un nombre excessivement élevé de gouttelettes. La section transversale du canal annulaire s'élargit modérément en aval de la portion de col 18 jusqu'à la section transversale 19. Cette conception du canal d'écoulement assure une croissance des gouttelettes comme cela a été décrit plus haut, de façon détaillée. Le sous-refroidissement diminue en dessous des valeurs critiques en raison de la croissance des gouttelettes. A partir de la section transversale 19, le canal d'écoulement se rétrécit à nouveau jusqu'à la section transversale 20. Dans la portion du canal, située entre les sections transversales 19 et 20, l'expansion du fluide porteur continue. Le taux de nucléation est pratiquement zéro dans cette portion. En raison du dégagement de chaleur et de la réduction du nombre de moles dans la phase gazeuse qui s'effectue simultanément, le nombre de Mach de l'écoulement est inférieur à l'unité dans la section de rétrécissement 20. La conception de la tuyère qui vient d'être décrite permet d'allonger la zone de nucléation et la durée de l'impulsion de nucléation et assure ainsi une diminution du sous-refroidissement et une croissance des premières gouttelettes au lieu d'une formation de nouvelles gouttelettes.

A partir de la section 20, qui constitue l'entrée dans la partie de séparateur 13, le diamètre de la paroi radialement interne 16 du canal augmente de façon à présenter un profil courbe. Dans la partie d'entrée, cette courbure se fait entre la section d'entrée 20 et une section transversale intermédiaire 21 selon un rayon de courbure indiqué en 22 et dont le centre porte la référence 23. Cette portion du canal annulaire est suivie d'une portion qui va jusqu'à la section transversale 24 et présente un rayon de courbure 25 plus faible. Le centre de courbure est indiqué en 26. La distance entre les parois radialement interne 16 et externe 17, c'est-à-dire la hauteur de l'espace annulaire du canal, est constante sur toute la longueur dans la partie de séparateur 13. Dans cette partie 13, l'expansion du fluide porteur des gouttelettes qui se sont formées dans la partie de tuyère 12 peut continuer à des vitesses d'écoulement plus grandes en raison de l'augmentation de la section transversale du canal. En raison de l'augmentation progressive de la section transversale de l'espace annulaire du canal, entre les sections transversales 20 et 21, on obtient une transition progressive de l'écoulement unidimentionnel à un écoulement axi-symétrique. Additionnellement on empêche des impacts à vitesse élevée de larges particules qui auraient pu traverser le collecteur de particules 2.

Le module représenté à la figure 6 présente la particularité que l'écoulement de fluide porteur le traverse sans rotation et que les particules se concentrent dans une couche périphérique s'étendant le long de la paroi interne.

La figure 7 montre une version d'une tuyère annulaire, similaire à celle de la figure 6, mais où le canal de la tuyère est divergent sur toute sa longueur entre les sections transversale du col 18 et de sortie 20. Dans cette tuyère, c'est la paroi radialement interne 16 qui, en se rétrécissant dans le sens de l'écoulement du fluide, confère à la tuyère son caractère divergent.

Les figures 8 à 9 montrent un deuxième mode de réalisation d'un module 4 de formation de particules de substance liquéfiée et de séparation de celles-ci de l'écoulement de fluide porteur. Ce mode de réalisation comprend un canal d'écoulement 25 de section transversale rectangulaire et dont la hauteur est constante sur toute la longueur du canal. La variation de la section transversale, conformément au canal selon la figure 6 est obtenue par une variation appropriée de la largeur du canal, comme cela ressort particulièrement clairement de la figure 9. Les sections transversales caractéristiques sont indiquées aux figures 8 et 9 par les mêmes références qu'à la figure 6. Le module selon les figures 8 à 9 peut être formé par des plaques supérieures 26 et inférieure 27 qui sont courbées dans la partie de séparation 13 de la manière ressortant de la figure 8 et entre lesquelles sont interposées deux entretoises latérales 28 dont la largeur varie comme l'indique la figure 9.

Dans ce mode de réalisation, on pourrait arrondir le canal au niveau des angles pour éviter des perturbations du fluide au niveau de ces angles droits du mode de réalisation représenté.

Comme dans le cas de la tuyère annulaire selon la figure 7, le canal 25 peut être uniquement divergent sur toute la longueur entre les sections transversales 18 et 20.

Les modules 4 selon les figures 8 et 9 sont particulièrement adaptées pour être utilisé dans des systèmes à turbines à vapeur et pour produire un gaz sec par une expansion postérieur pouvant être réalisée avec un rendement très élevé.

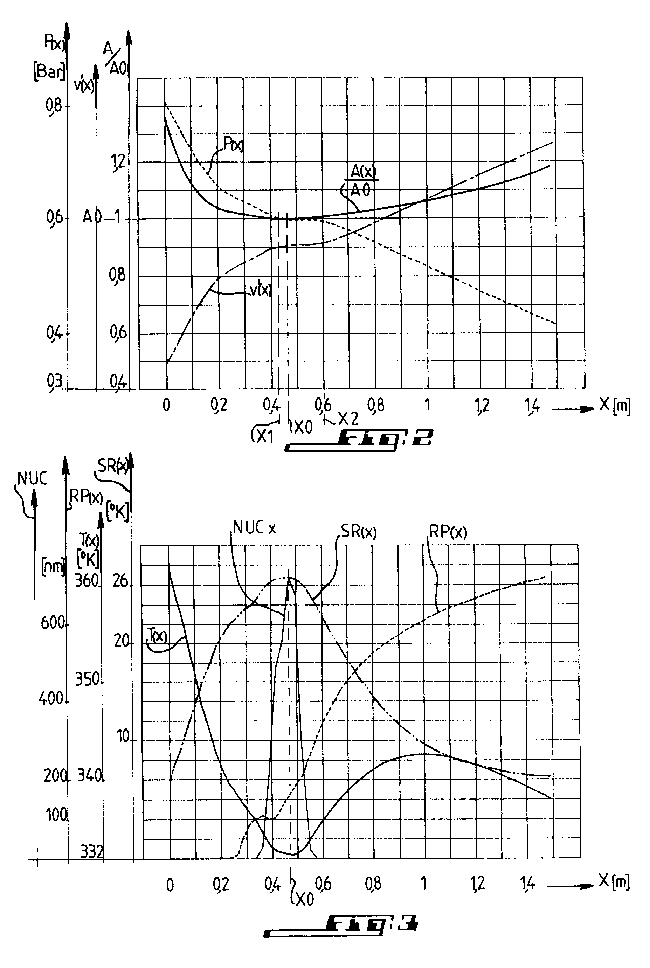

Les figures 10 à 12 montrent un agencement de trois modules 4 selon les figures 8 et 9. Ces modules sont superposés et axialement décalés de façon à former un ensemble compact dans lequel les parois inférieure et supérieure des parties de tuyère 12 des modules supérieur et inférieur forment les parois respectivement supérieure et inférieure du module intermédiaire. Au niveau des parties de séparation 13, qui sont courbées, les parois communes sont plus épaisses ou constituées par deux parois minces courbées en conséquence, qui délimitent entre elles un espace vide 31 qui, dans le sens axial des canaux, présente une section transversale de forme de lunule et permet l'installation de dispositifs supplémentaires, tel que par exemple de moyens de séparation secondaire, drainage intermédiaire, d'instruments de mesure ou de moyen d'injection d'un solvant, d'un agent tensioactif ou d'un écoulement gazeux secondaire pour former un coussin d'air ou pour éviter des effets secondaires non désirables tels que l'érosion. Dans ce cas, au moins une partie des parois est poreuse.

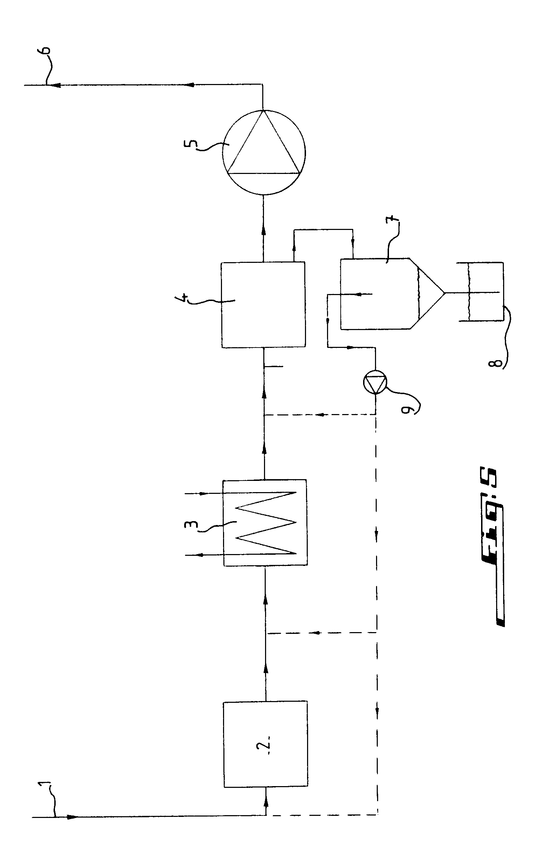

La figure 13 montre un module 4 formé par un ensemble qui comporte cinq modules individuels de tuyère et de séparation 4, désignés par les signes de référence 33 à 37. Le module 33 est avantageusement du type de module représenté aux figures 8 et 9, tandis que les autres modules 34 à 37 sont constitués par des agencements de plusieurs modules identiques, par exemple selon les figures 10 à 12. Les groupes de modules individuels 34 à 37 comportent respectivement deux, quatre, huit et seize canaux du type représenté aux figures 8 et 9. Les différents modules 33 à 37 sont montés en parallèle dans l'écoulement du fluide gazeux porteur de la substance liquéfiable. Chaque module est pourvu à son entrée d'une vanne d'isolement 39.

Les figures 14 à 18 montrent un mode de réalisation d'un module 4 selon l'invention, qui est particulièrement avantageux pour traiter un écoulement de fluide dans lequel la concentration des particules est tellement élevée qu'il n'est plus raisonnable de les faire grossir.

Le module utilisé présente la structure générale d'un module du type représenté aux figures 8 et 9 mais dont l'espace interne de la partie de tuyère 12 est séparé par une cloison de séparation axiale 41 en deux canaux séparés 42 et 43, jusqu'à l'entrée de la partie de séparation 13. Le canal 42 est destiné à véhiculer le fluide porteur des particules tandis que le canal 43 a pour fonction de transporter un écoulement auxiliaire d'un fluide porteur d'une substance liquéfiable. A l'intérieur de ce canal le fluide est soumis à une expansion adiabatique selon l'invention pour former un nuage de gouttelettes de taille relativement importante, comme cela a été expliqué plus haut, de façon détaillée. L'écoulement principal subit également une expansion dans le canal 42 selon tout diagramme de pression appropriée. Au niveau de l'entrée dans la partie de séparation 13, lorsque les gouttelettes formées dans l'écoulement auxiliaire sont suffisamment grandes, les écoulements principal et auxiliaire, qui sont sensiblement parallèles, viennent en contact. Celui-ci doit avantageusement être isocinétique pour éviter des turbulences et isotherme pour éviter une évaporation de gouttelettes. Les gouttelettes relativement grosses de l'écoulement auxiliaire croisent les lignes d'écoulement de l'écoulement principal sous l'effet du champ de forces créé par la courbure des lignes d'écoulement. Au cours de leurs mouvements en direction de la paroi inférieure 27, les gouttelettes absorbent les particules plus petites transportées par le courant principal selon un effet de coagulation par diffusion forcée.

Cet effet d'absorption des petites particules, par les grosses gouttelettes dans la partie de séparation 13 s'effectue même en absence de toutes parois de séparation dans le module 4 et constitue un des avantages importantes de l'invention. En effet, des fines particules solides telles que par exemple des particules de suie, contenues dans le fluide et aussi des fines particules présentes dans le fluide sous forme d'un brouillard seront séparées de ce fluide par l'effet d'absorption décrite. En effet, le croisement des trajectoires de ces fines particules et des trajectoires des grosses gouttelettes se produit dans la partie de séparation en raison de leur masse différente.

Le module 4 selon les figures 14 à 18, peut utilisé dans d'autres cas d'application d'un intérêt particulier dans le domaine de la chimie. Il procure une façon simple de mettre un gaz en contact avec un liquide pendant un intervalle de temps trés court. Il peut également être utilisé pour produire des particules calibrées. En effet, les grosses gouttelettes formées dans l'écoulement auxiliaire peuvent rester à l'état liquide ou solide après la récompression si l'écoulement principal qu'il croise est suffisamment froid. Dans ce cas particulier, le contact entre les deux écoulements ne sera pas isotherme.

Les figures 19 à 23 concernent encore un autre mode de réalisation particulier d'un module 4 selon l'invention. Le canal du dispositif de tuyère 12 de ce module présente la forme générale du canal 25 du mode de réalisation selon les figures 8 et 9. Les sections transversales caractéristiques de ce canal portent par conséquent les mêmes symboles de référence que sur les figures. La particularité du mode de réalisation selon les figures 19 à 23 réside dans la structure des barettes latérales qui sont maintenant formées par des éléments creux ayant une paroi interne 45 qui délimitent le canal d'écoulement 25 et une paroi extérieure 46. La paroi interne 45 est déformable au niveau de la section transversale 18 formant le premier col de la tuyère. Sous l'effet d'une vis de réglage 48 qui traverse la paroi extérieure 46 perpendiculairement à l'axe du canal et dont l'extrémité interne porte contre la face interne de la paroi 45, avantageusement par l'intermédiaire d'un transducteur piézo-électrique 49, l'aire de la section transversale de col 18 est variable. Par contre au niveau de la section tran-

EP 0 490 861 A1

versale 20 formant le deuxième col, la paroi 45 est rigide en raison de la cloison interne tranversale 50. En amont du col 18, la paroi 45 est coupée en 51 sur toute sa hauteur. Les extrémités libres sont configurées de telle façon que celle de la partie de paroi déformable recouvre partiellement la zone d'extrémité de l'autre partie de paroi qui est rigide et biseautée, de façon à permettre un mouvement de glissement de la portion mobile sur la portion fixe.

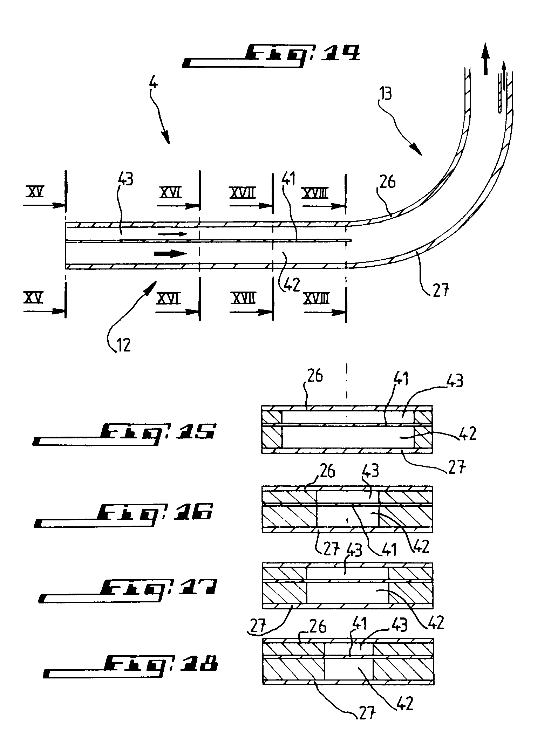

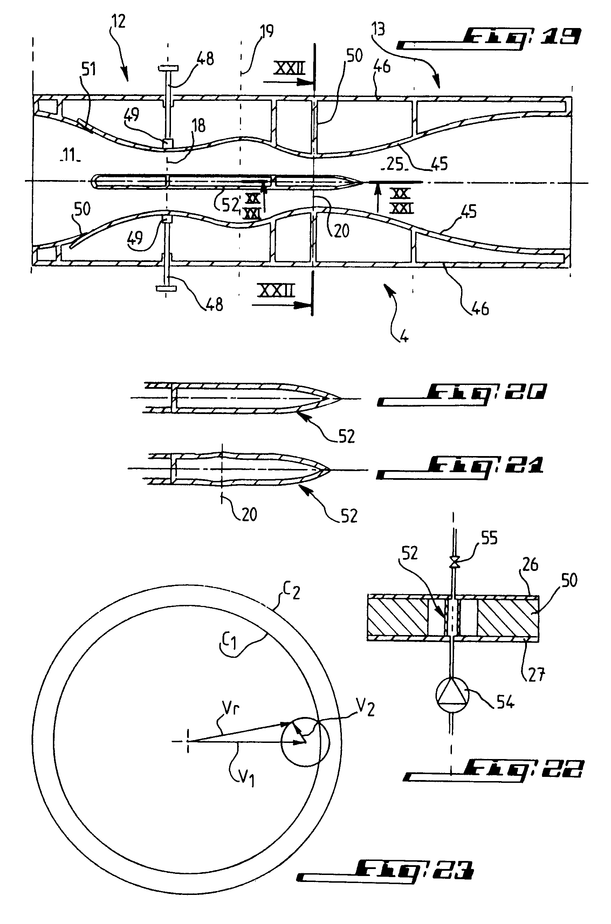

Un élément de paroi axiale rectiligne 52 est disposé dans l'axe du canal et s'étend à partir d'une zone en amont de la section transversale de col 18 jusqu'au-delà de la section transversale du second col 20. L'extrémité située en aval du sens de l'écoulement est conformée en arête tandis que l'extrémité en amont est arrondie. Comme il ressort particulièrement des figures 20 et 21, la paroi axiale 21 est creuse, au moins dans sa portion traversant la section transversale de col 20. Les parois sont déformables au niveau du col 20, comme il ressort de la figure 21 sur laquelle ces parois sont bombées vers l'extérieur au niveau d'un plan indiquant la section transversale 20. La figure 22 montre que cette déformation de la paroi ou cloison de séparation axiale 52 qui permet de faire varier l'aire du second col 22 de la tuyère peut être produite à l'aide de par exemple l'air sous pression dont le circuit de circulation comporte un élément compresseur 54 et une vanne 55.

La variation de l'aire de la section transversale de premier col 18 permet de contrôler le diamètre des gouttelettes et par exemple d'augmenter d'avantage leur taille. Les transducteurs piézo-électrique 49 peuvent produire une variation périodique de l'aire du col de façon que le sous-refroidissement peut varier autour du seuil de nucléation. En procédant ainsi, un nombre réduit de gouttelettes peut être périodiquement formé dans l'écoulement. Celui-ci peut alors comprendre axialement en alternance des tranches à l'intérieur desquelles n'a eu lieu aucune formation de gouttes et de tranches de formation de gouttes, les premières constituent des réserves de croissance pour les gouttelettes formées dans les tranches de condensation adjacentes. Ainsi une grande quantité de vapeur sursaturée peut condenser en un nombre réduit de gouttelettes dont le diamètre moyen est élargi.

La variation de l'aire de la section transversale du second col 20, à l'aide de la déformation de la cloison axiale interne 52 permet de modifier l'écoulement nominal du dispositif de tuyère et contribue à augmenter encore la fléxibilité d'ajustage de ce dernier.

La figure 23 illustre le fonctionnement du dispositif de variation de l'aire du premier col 18, formé par les vis 48 et les transducteurs piézo-électrique 49. Sur le schéma de cette figure 23, le vecteur horizontal v1 symbolise la vitesse moyenne de l'écoulement du fluide à travers la section transversale de col 18, tandis que la vecteur rotatif v2 représente la variation de la vitesse d'écoulement produite par les transducteurs piézo-électrique 49. La résultante Vr des deux vecteurs v1 et v2 symbolise alors la vitesse résultante instantanée de l'écoulement au niveau du col 18. Les cercles c1 et c2 concentriques autour de l'extrémité libre du vecteur v1 représentent respectivement la vitesse à laquelle le sous-refroidissement du fluide porteur de la substance liquéfiable atteint le seuil de la nucléation et la vitesse à laquelle l'impulsion de la nucléation prend fin. Dans le cercle c1 l'écoulement est sec. C'est une situation stable hors d'équilibre. A l'extérieur du cercle c2, l'écoulement comporte deux phases. L'espace annulaire compris entre les cercles peut être considéré comme formant la zone de nucléation, c'est-à-dire la zone de Wilson. La longueur du vecteur v1 est variable à l'aide des vis 48 tandis que la longueur du vecteur v2 est variable à l'aide de l'amplitude de pulsation des transducteurs piézo-électrique.

La figure 23 illustre la formation périodique de tranches axialement en alternance de formation de gouttes et de tranches qui n'en contiennent pas, selon que le vecteur résultant $v_r$ pénètre ou ne pénètre pas dans la zone annulaire entre les deux cercles c1 et c2. La fréquence de la rotation du vecteur v2 est de préférence élevée pour être sûr que l'écoulement est sensiblement homogène lorsqu'il parvient dans la partie de séparation 13.

L'invention telle que décrite à l'aide d'un nombre non limitatif de modes de réalisation trouve un grand nombre d'application dans l'industrie.

Ainsi, l'invention est particulièrement utilisable dans le domaine de la récupération d'énergie, du desséchement industriel, du desséchement des fluides porteurs d'une substance liquéfiable et de l'abaissement du point de rosée de gaz, de la technologie de purification de gaz et de séparation d'aérosols et de séparation de gaz.

Plus précisément, une première application principale de l'invention est le domaine du séchage industriel où elle procure des systèmes de pompage de chaleur, exempts de fréon, compacts et d'un faible coût de fonctionnement, qui réalisent l'extraction d'une vapeur diluée dans un gaz porteur, le dégagement dans l'écoulement porteur d'une quantité de chaleur égale à la chaleur de vaporisation de la masse de vapeur extraite.

Une seconde application principale de l'invention réside dans le domaine du desséchement de gaz où sa propriété d'extraire à l'état liquide des vapeurs saturées, de gaz porteurs peut être utilisé notamment à des fins suivantes :

– l'abaissement du point de rosée d'un écoulement de fumée et son échauffement avant son évacuation,

11

le cas échéant en combinaison pour des processus de contrôle de la pollution atmosphérique, les produits polluants étant partiellement captés par les gouttelettes formées dans l'écoulement.

– l'abaissement du point de rosée de gaz avant leur introduction dans des pipelines pour éliminer le risque de formation de poches liquides dans des sections de fond ou pour réduire les risques de corrosion.

– le retrait de l'humidité dans des locaux tels que des salles du bain ou de douches collectives pour empêcher le développement de champignons microscopiques sur les parois, ou dans des cuisines, le cas échéant en combinaison avec un ventilateur, pour extraire des vapeurs grasses de fumées de cuisines et pour éliminer un risque de feux dans la cheminée.

– abaissement du point de rosée d'un écoulement d'air comprimé ou de tout autre gaz qui doit être desséché, avant un traitement chimique.

Un troisième domaine principal d'application de l'invention réside dans la technologie de purification et de séparation d'aérosols, par augmentation de la taille des particules à extraire, par dépôt sur ces particules d'un condensat.

Le module selon l'invention peut être utilisé pour purifier l'air de combustion d'un moteur à combustion interne. Il permet de préchauffer l'air de combustion et de produire de l'eau douce. Cette dernière application est particulièrement intéressante pour des bateaux ou dans des pays où l'air atmosphérique contient un taux élevé d'humidité et où l'eau douce est onéreuse.

## Revendications

1. Procédé pour extraire une substance liquéfiable présent dans un écoulement d'un fluide gazeux porteur de cette substance, selon lequel on soumet le fluide à un sous-refroidissement par une expansion adiabatique, caractérisé en ce que l'on réalise cette expansion adiabatique dans des conditions assurant une condensation sous forme de particules de substance liquéfiée relativement grande.

2. Procédé selon la revendication 1, caractérisé en ce que pour extraire les particules de substance liquéfiées relativement grandes contenues dans cet écoulement de fluide, on introduit celui-ci dans un dispositif séparateur dans lequel on impose à cet écoulement un trajet courbe, la séparation s'effectuant sous l'effet des forces inertielles agissant sur les particules.

3. Procédé selon l'une des revendications 1 ou 2, caractérisé en ce qu'on amène l'expansion adiabatique précitée à se dérouler de façon que la pente de la tangeante à la courbe de pression ($P(x)$) à l'entrée de la zone de Wilson (W) et l'excédant (EX2) du sous-refroidissement (SR) par rapport au sous-refroidissement critique de nucléation ($SR_{nuc}$) soient relativement faibles.

4. Procédé selon la revendication 3, caractérisé en ce que l'on prolonge la durée de la phase de nucléation et favorise une diminution du sous-refroidissement en assurant la formation d'un nombre relativement faible de particules ou gouttelettes de substance liquéfiée, ayant un volume important.

5. Procédé selon l'une des revendications précédentes, caractérisé en ce que l'on utilise une tuyère du type convergent-divergent en donnant à la zone du col un profil assurant dans cette zone au moins un palier de la courbe de pression ($P(x)$) et de la vitesse d'écoulement ($v(x)$) du fluide au niveau de cette zone.

6. Procédé selon la renvendication 5, caractérisé en ce que l'on fait varier périodiquement l'aire de la section transversale du col précité de la tuyère de façon que l'écoulement en aval de la zone de nucléation comprend, axialement successivement et en alternance, des tranches contenant des particules de substance liquéfiées et des tranches ne contenant pas de telles particules et destinées à constituer des réserves de croissance pour les particules qui ont été formées dans les tranches voisines.

7. Procédé selon l'une des revendications 1 à 6, caractérisé en ce que, lorsqu'il s'agit d'extraire une substance contenue dans un fluide porteur sous forme de fines particules, le cas échéant solides, on créé à l'aide d'une tuyère, par expansion à la sortie de celle-ci, un écoulement rapide du fluide porteur, utilise un écoulement de particules liquéfiées obtenues par une expansion adiabatique précitée, comme écoulement auxiliaire, met en contact les deux écoulements de façon que les particules créées dans l'écoulement auxiliaire traversent l'écoulement aux particules à extraire, pour obtenir une absorption des fines particules par les grosses particules de substance liquéfiée, par un effet de coagulation par diffusion forcée, à la sortie du canal de séparation.

8. Système pour la mise en oeuvre du procédé selon l'une des revendications précédentes, caractérisé en ce qu'il comprend un module (4) comportant un canal d'écoulement ayant une première partie (12) formant une tuyère d'expansion adiabatique adaptée pour former les particules de substance liquéfiée d'un grand volume.

9. Système selon la revendication 8, caractérisé en ce qu'un dispositif de séparation (13) et monté en aval du module précité (4) et que le canal d'écoulement de ce dispositif de séparation (13) présente une hauteur constante dans le plan de sa courbure, tandis que sa largeur augmente dans la direction d'écoulement du fluide.

10. Système selon l'une des revendications 8 ou 9, caractérisé en ce que la partie de tuyère (12) comprend successivement dans l'axe d'écoulement du fluide, une portion d'entrée convergente se terminant par un col ($A_O$,18) conformé pour que le sous-refroidissement (SR) atteigne des valeurs suffisamment importantes pour déclencher la nucléation (NUC), mais assez faible pour éviter la formation d'un nombre excessivement élevé de particules, et une portion modérément divergente (entre 18 et 19 ; 18 et 20) qui est conformée pour que le sous-refroidissement (SR) diminue en dessous des valeurs critiques de nucléation ($SR_{nuc}$) pour assurer une croissance des particules venant d'être formées.

11. Système selon la revendication 10, caractérisé en ce qu'il comprend, en aval de la portion divergente (entre 18 et 19) une portion convergente (entre 19 et 20) conformée pour assurer la continuation de l'expansion du fluide porteur mais où le taux de nucléation est sensiblement zéro.

12. Système selon la revendication 10, caractérisé en ce que le canal de la partie de tuyère (12) est divergent sur toute sa longueur (entre 18 et 20) en aval du col ($A_O$, 18).

13. Système selon l'une des revendications 8 à 12, caractérisé en ce que le module de tuyère et de séparation (4) est formé par un seul corps de révolution comprenant, successivement dans l'axe d'écoulement du fluide, une partie cylindrique d'entrée (11), une partie annulaire (12,13) dont les parois radialement interne (16) et externe (17) délimitent la partie de tuyère (12) précitée et la partie de séparation (13) dans laquelle le diamètre des parois radialement interne et externe (16,17) augmente de façon à former un canal annulaire de hauteur constante et dont la section transversale d'écoulement augmente.

14. Système selon l'une des revendications 8 à 12, caractérisé en ce que le module de tuyère et de séparateur (4) est formé par un corps unique dans lequel est délimité un seul canal d'écoulement (25) d'une section transversale sensiblement rectangulaire, de hauteur sensiblement constante sur toute sa longueur, mais dont la largeur varie pour former les parties d'entrée (11) de tuyère (12) et de séparateur (13) précités.

15. Système selon l'une des revendications 8 et 14, caractérisé en ce qu'il comprend un agencement de plusieurs modules de tuyère et de séparation (4) précité dans lequel une pluralité de tels modules sont superposés.

16. Système selon la revendication 15, caractérisé en ce que plusieurs modules sont superposés en étant axialement décalés de façon que dans les parties de tuyère (12), les parois supérieure et inférieure adjacentes de deux modules adjacents sont formés par une même paroi, tandis que dans la partie de séparation (13), ces parois délimitent un espace (31) permettant l'installation de dispositifs ou appareils supplémentaires.

17. Système selon l'une des revendications 15 ou 16, caractérisé en ce qu'il comprend un ensemble de plusieurs agencements précités montés en parallèle dans le fluide porteur de la substance liquéfiable.

18. Système selon la revendication 17, caractérisé en ce que l'ensemble comprend cinq agencements (33 à 37) comprenant respectivement un, deux, quatre, huit et seize modules identiques de tuyère et de séparation, en amont de chaque module étant prévue une vanne de réglage ou de fermeture (39).

19. Système selon l'une des revendications 8 à 18, pour la mise en oeuvre du procédé selon la revendication 7, caractérisé en ce que l'espace interne de la partie de tuyère (13) est divisé par une cloison interne axiale (41) en deux canaux parallèles (42,43) destinés à véhiculer et former l'écoulement de fines particules précité et l'écoulement auxiliaire précité contenant des gouttelettes d'un volume relativement important, la cloison 41 s'étendant au moins jusqu'à la fin de la zone de nucléation.

20. Système selon l'une des revendications 8 à 18 et pour la mise en oeuvre du procédé selon la revendication 6, caractérisé en ce que la paroi délimitant le canal d'écoulement (25) est déformable au moins au niveau du col ($A_O$,18), de façon que l'aire de la section transversale de ce col soit variable, et en ce que des moyens de variation de cette aire par déformation de la paroi sont prévus, qui sont sélectivement actionnables.

21. Système selon la revendication 20, caractérisé en ce que les moyens de variation de l'aire du col ($A_O$,18), comprennent un organe de réglage (48) de l'aire du col à une valeur moyenne et un élément (49) tel qu'un élément piézo-électrique permettant une variation périodique à une fréquence prédéterminée de l'aire du col, autour de ladite valeur moyenne.

22. Système selon l'une des revendications 20 ou 21, caractérisé en ce qu'une cloison axiale (52) est montée dans l'axe du canal (25) qui s'étend sur toute la hauteur du canal et avantageusement à partir d'un emplacement en amont du col ($A_O$,18), jusqu'en aval du deuxième col dans la section transversale (20) formée par la portion convergente (entre 19 et 20) de la tuyère, et en ce que le profil de cette cloison est déformable au niveau du col (20) de façon à faire varier l'aire de la section transversale de ce col en vue d'une variation de l'écoulement nominal à travers la tuyère.

23. Système de la revendication 22, caractérisé en ce que la cloison (52) est creuse et déformable dans sa partie d'épaisseur variable et que cette variation est réalisée par introduction de l'air sous pression dans cette partie creuse ou au moyen d'un dispositif piézo-électrique.

24. Système selon l'une des revendications 9 à 23, caractérisé en ce que la recompression de l'écoulement à l'issue (14) du canal séparateur est opérée dans une tuyère de type convergent divergent.

25. Procédé selon l'une des revendications 2 à 7, caractérisé en ce qu'on augmente la section transversale du canal séparateur pour obtenir une augmentation de la vitesse d'écoulement des fluides dans ce canal, sans que la distance que les particules doivent parcourir soit augmentée par cette augmentation de la section transversale.

Fig. 1 a)

Fig. 1 b)

Fig. 2

Fig. 3

_Fig_ 4

EP 0 490 861 A1

Fig. 5

_Fig. 6_

_Fig. 7_

**Fig. 11**

26 25

27

**Fig. 12**

25 26

27

13

XII XI

12 26

25

25

25

31

31

27

XII XI

**Fig. 10**

4

12

13

IX

26

25

27

21

14 15

IX

24

**Fig. 8**

**Fig. 9**

18 19 20

28

28

Fig. 13

Fig. 14

Fig. 15

Fig. 16

Fig. 17

Fig. 18

Fig. 19

Fig. 20

Fig. 21

Fig. 22

Fig. 23

EP 0 490 861 A1

Office européen
des brevets

**RAPPORT DE RECHERCHE EUROPEENNE**

Numero de la demande

EP    91 87 0198

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-B-1 255 090 (VERFAHRENSTECNIK DR. ING. K. BAUM)<br>--- | | B01D45/16<br>B01D45/12<br>B01D45/02<br>B01D53/26 |
| A | US-A-4 292 050 (H.D.LINHARDT ET AL.)<br>--- | | |
| A | US-A-4 111 671 (H.V.WILLIAMSON)<br>--- | | |
| A | US-A-3 528 221 (R.L.GARRETT ET AL.)<br>--- | | |
| A | US-A-4 886 523 (P.E.MALDAGUE)<br>--- | | |
| A | US-A-3 559 373 (R.L.GARRETT ET AL.)<br>--- | | |
| A | US-A-3 710 561 (F.GARRONE)<br>--- | | |
| A | FR-A-1 536 189 (ESSO PRODUCTION RESEARCH CO.)<br><br>----- | | |

**DOMAINES TECHNIQUES RECHERCHES (Int. Cl.5)**

B01D

Le présent rapport a été établi pour toutes les revendications

| Lieu de la recherche | Date d'achèvement de la recherche | Examinateur |
|---|---|---|
| LA HAYE | 26 FEVRIER 1992 | PYFFEROEN K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)

24